# EUROPÄISCHE PATENTSCHRIFT

(11) **EP 1 985 975 B1**
(45) Veröffentlichungstag und Bekanntmachung des Hinweises auf die Patenterteilung: **25.01.2017**
(21) Anmeldenummer: 08004923.2
(22) Anmeldetag: 17.03.2008
(51) Int. Cl.: G01F 1/84

(54) **Coriolis-Massendurchflussmessgerät**
Coriolis mass flow measuring device
Débitmètre massique Coriolis

(30) Priorität: 25.04.2007 DE 102007019852
(43) Veröffentlichungstag der Anmeldung: 29.10.2008
(60) Teilanmeldung: 13003445.7
(73) Patentinhaber: Krohne AG, 4019 Basel (CH)
(72) Erfinder: Rolph, Chris, Hartwell, Northants NN7 2HA (GB); Harrison, Neil, Duston, Northampton NN5 6SR (GB); Hussain, Youssif, Weston Favell, Northampton NN3 3DA (GB); Wang, Tao, Uxbridge UB8 3PH (GB)
(74) Vertreter: Gesthuysen, Hans Dieter

(56) Entgegenhaltungen:
- US-A- 5 987 998
- US-A1- 2004 016 303

## Beschreibung

Die Erfindung betrifft ein Coriolis-Massendurchflußmeßgerät, mit einem zu Schwingungen anregbaren Meßrohr, einem Schwingungserzeuger oder/und einem Schwingungsaufnehmer, wobei der Schwingungserzeuger oder/und der Schwingungsaufnehmer einen Permanentmagneten aufweist, wobei der Permanentmagnet in einem Magnethalter vorgesehen ist.

Massendurchflußmeßgeräte, die nach dem Coriolis-Prinzip arbeiten, weisen im allgemeinen wenigstens einen Schwingungserzeuger auf, mit dem das Meßrohr zu Schwingungen angeregt wird, sowie zwei Schwingungsaufnehmer, mit denen die erzielten Schwingungen des Meßrohrs erfaßt werden. Die Bestimmung des Massendurchflusses ist dann z. B. über die Phasenverschiebung zwischen den von den beiden Schwingungsaufnehmern jeweils erfaßten Schwingungen bestimmbar.

Der Schwingungserzeuger und die Schwingungsaufnehmer sind im allgemeinen derart aufgebaut, daß sie einen Permanentmagneten sowie eine Magnetspule aufweisen, um auf elektrischem Wege Schwingungen auf das Meßrohr zu übertragen bzw. Schwingungen des Meßrohrs zu erfassen. Um den Permanentmagneten am Schwingungserzeuger bzw. am Schwingungsaufnehmer zu befestigen, wird dieser im allgemeinen mit einer Bohrung versehen, so daß er mittels einer durch die Bohrung hindurchgeführten Schraube fixiert werden kann. Durch eine derartige Befestigungsschraube wird jedoch das Magnetfeld negativ beeinflußt. Im übrigen ist der Permanentmagnet auf diese Weise mechanischen äußeren Einflüssen, wie Stößen beim Transport oder bei der Installation, praktisch schutzlos ausgesetzt, so daß Beschädigungen des Coriolis-Massendurchflußmeßgeräts nicht ausgeschlossen werden können.

Aus der US 5,987,998 A ist ein Hochtemperatur-Antriebselement für ein Coriolis-Massendurchflussmessgerät mit einer Spulenbaugruppe und einer Magnetbaugruppe bekannt. Die Magnetbaugruppe weist einen Magnethalter auf. Sämtliche Komponenten des Antriebselements, insbesondere auch der Magnethalter, sind aus einem hochtemperaturfesten Material mit übereinstimmenden Wärmeausdehnungskoeffizienten gefertigt, das sich bei hohen Temperaturen nicht zersetzt.

Aus der US 2004/016303 A1 ist ein Aktuator für ein Coriolis-Massendurchf lussmessgerät mit einem Magnethalter bekannt. Um bei dem Aktuator die magnetische Flussdichte zu maximieren, wird der Magnethalter aus einem ferromagnetischen Material gefertigt, vorzugsweise aus Stahl.

Es ist daher die Aufgabe der Erfindung, ein derartiges Coriolis-Massendurchflußmeßgerät anzugeben, das einen Schwingungserzeuger oder/und einen Schwingungsaufnehmer mit einem effektiv nutzbaren Permanentmagneten aufweist.

Ausgehend von dem eingangs beschriebenen Coriolis-Massendurchflußmeßgerät ist diese Aufgabe dadurch gelöst, daß der Magnethalter aus Kunststoff besteht.

Der Permanentmagnet ist in eine eigens für seine Halterung vorgesehene Einrichtung, nämlich den Magnethalter, einzusetzen. Damit wird der Permanentmagnet wenigstens teilweise von dem Magnethalter umschlossen, was einen Schutz gegen äußere Einflüsse, wie Stöße, darstellt. Ferner wird die Fixierung des Permanentmagneten durch den ihn wenigstens teilweise umfassenden Magnethalter realisiert, so daß der Permanentmagnet mit keiner Bohrung zum Hindurchführen einer Befestigungsschraube versehen werden muß.

Grundsätzlich kann der Permanentmagnet in dem Magnethalter auf unterschiedliche Weisen fixiert sein, z. B. mittels einer Verklebung. Gemäß einer bevorzugten Weiterbildung der Erfindung ist jedoch vorgesehen, daß der Permanentmagnet in dem Magnethalter formschlüssig oder/und kraftschlüssig gehalten ist. Dies erleichtert die Installation, da damit keine weiteren Mittel zur Befestigung des Permanentmagneten erforderlich sind.

Weiterhin ist gemäß einer bevorzugten Weiterbildung der Erfindung vorgesehen, daß der Magnethalter derart ausgestaltet ist, daß der Permanentmagnet in alle Richtungen fixiert ist. Dazu kann gemäß einer bevorzugten Weiterbildung der Erfindung insbesondere vorgesehen sein, daß der Magnethalter einen Aufnahmeraum für den Permanentmagneten aufweist, wobei der Permanentmagnet in diesem Aufnahmeraum vorzugsweise mittels einer Verrastung gehalten ist. Auf diese Weise ist die Installation des Permanentmagneten ganz besonders einfach, da der Permanentmagnet einfach in den Magnethalter eingeschoben wird, nämlich so weit, bis es zu der angesprochenen Verrastung kommt, so daß der Permanentmagnet in dem Magnethalter gehalten ist.

In diesem Zusammenhang ist es gemäß einer bevorzugten Weiterbildung der Erfindung insbesondere vorgesehen, daß der Magnethalter wenigstens eine flexible Wand, vorzugsweise mehrere flexible Wände aufweist. Auf diese Weise wird die Installation weiter erleichtert, da die flexiblen Wände, an denen sich vorzugsweise auch Verrastungseinrichtungen befinden, beim Einschieben des Permanentmagneten ausweichen können, so daß weniger Kraft zur Fixierung des Permanentmagneten erforderlich ist.

Grundsätzlich kann der Magnethalter verschiedene geometrische Formen aufweisen. Gemäß einer bevorzugten Weiterbildung der Erfindung ist jedoch vorgesehen, daß der Magnethalter im wesentlichen als Hohlzylinder ausgebildet ist, in den der Permanentmagnet eingesetzt ist. Dabei ist gemäß einer bevorzugten Weiterbildung der Erfindung vorgesehen, daß auch der Permanentmagnet zylinderförmig ist, und zwar mit derartigen Abmessungen, daß er mit einem Paßsitz innerhalb des Magnethalters angeordnet werden kann.

Erfindungsgemäß ist vorgesehen, daß der Magnethalter aus einem Kunststoff besteht. In diesem Zusammenhang ist es gemäß einer bevorzugten Weiterbildung der Erfindung ferner vorgesehen, daß der Schwingungserzeuger oder/und der Schwingungsaufnehmer eine Halteeinrichtung aufweist, mit der der Magnethalter mittels einer Preßfügung verbunden ist. Eine derartige Preßfügung ist insbesondere auf eine derartige Weise herstellbar, daß wenigstens ein an dem Magnethalter ausgebildeter Kunststoffstift in eine in der Halteeinrichtung vorgesehene Bohrung eingeführt und durch diese hindurchgeführt wird, um das durch die Bohrung der Halteeinrichtung hindurchgeführte Ende dann zu erwärmen und mit einem Kopf zu versehen, der ein Herausrutschen aus der Bohrung vermeidet, so daß es zur Fixierung des Magnethalters an der Halteeinrichtung kommt.

Ferner beschrieben wird ein Coriolis-Massendurchflußmeßgerät, mit genau zwei zu Schwingungen anregbaren Meßrohren und einem Gehäuse, wobei an den Enden der Meßrohre jeweils ein Übergangsstück von einem Rohr auf die beiden Meßrohre vorgesehen ist.

Häufig weisen Massendurchflußmeßgeräte, die nach dem Coriolis-Prinzip arbeiten, zwei parallel zueinander verlaufende Meßrohre auf, die im allgemeinen zu gegensinnigen Schwingungen angeregt werden. Dies hat den Vorteil, daß der Schwerpunkt des gesamten Meßgeräts während seines Betriebs konstant bleibt, was die Schwingungskopplung mit dem Rohrleitungssystem, in das das Massendurchflußmeßgerät eingebaut ist, verringert, was wiederum vorteilhaft für das Signal-zu-Rausch-Verhältnis ist. Bei einem derartigen Coriolis-Massendurchflußmeßgerät mit zwei Meßrohren ist es damit erforderlich, die Strömung aufzuteilen, nämlich von dem einen Rohr des Rohrleitungssystems, in das das Coriolis-Massendurchflußmeßgerät eingebaut ist, auf die beiden Meßrohre. Dazu wird an den beiden Enden des Coriolis-Massendurchflußmeßgeräts jeweils ein Übergangsstück vorgesehen. Diese Übergangsstücke definieren damit den Beginn und das Ende der Meßrohre.

Entsprechendes ist z. B. in der US 2004/0045369 A1 gezeigt, wobei dort zur Schwingungsisolierung der Meßrohre von dem Rohrleitungssystem, in das das Massendurchflußmeßgerät eingebaut ist, ein dickwandiges Gehäuse vorgesehen ist, das die beiden Übergangsstücke miteinander verbindet. Dies führt zwar zu einer guten Schwingungsisolierung des Coriolis-Massendurchflußmeßgeräts und damit zu einem guten Signal-zu-Rausch-Verhältnis, jedoch wird das Coriolis-Massendurchflußmeßgerät auf diese Weise sehr schwer.

Bei dem beschriebenen Coriolis-Massendurchflußmeßgerät sind die Übergangsstücke mit einer von dem Gehäuse verschiedenen Verstärkungsbrücke miteinander verbunden.

Damit werden die Funktionen der Verstärkungsbrücke zur Schwingungsisolierung des Coriolis-Massendurchflußmeßgeräts und die Funktion des Gehäuses zum mechanischen Schutz der Meßrohre und anderer in dem Gehäuse enthaltenen Komponenten des Coriolis-Massendurchflußmeßgeräts voneinander getrennt. Dies ermöglicht es, ein leichtgewichtiges Gehäuse, z. B. aus Kunststoff, bereitzustellen, während die Verstärkungsbrücke gerade so stabil und massiv ausgestaltet wird, daß die erforderliche Schwingungsisolierung erzielt wird.

Dabei ist es gemäß einer bevorzugten Weiterbildung vorgesehen, daß die Meßrohre vollständig außerhalb der Verstärkungsbrücke angeordnet sind. Insbesondere ist gemäß einer bevorzugten Weiterbildung der Erfindung vorgesehen, daß die Verstärkungsbrücke plattenförmig ausgestaltet ist und dabei z. B. zumindest abschnittsweise parallel zu den beiden Meßrohren verläuft.

Grundsätzlich kann die Verstärkungsbrücke als massives Bauteil, z. B. als massive Platte, ausgestaltet sein. Gemäß einer bevorzugten Weiterbildung ist jedoch vorgesehen, daß die Verstärkungsbrücke hohl ist. Dabei kann die Verstärkungsbrücke grundsätzlich als ein Rohr ausgestaltet sein, gemäß einer bevorzugten Weiterbildung ist jedoch vorgesehen, daß die Verstärkungsbrücke einen rechteckigen Querschnitt aufweist, insbesondere also als Hohlplatte ausgestaltet ist. Dieser bevorzugten Weiterbildung liegt die Erkenntnis zugrunde, daß eine massive Platte gegenüber einer Hohlplatte nur wenig steifer ist, jedoch deutlich schwerer. Auf diese Weise wird also weiter eine Reduzierung des Gewichts des Coriolis-Massendurchflußmeßgeräts erzielt.

Ferner beschrieben ist ein Coriolis-Massendurchflußmeßgerät, mit genau zwei zu Schwingungen anregbaren Meßrohren, wobei an den Enden der Meßrohre jeweils ein Übergangsstück von einem Rohr auf die beiden Meßrohre und zusätzlich auch ein Anschlußstück zum Anschluß an ein Rohrleitungssystem vorgesehen ist. Dabei handelt es sich also um ein Coriolis-Massendurchflußmeßgerät, wie zuvor schon angesprochen, das zusätzlich jeweils ein Anschlußstück, wie einen Flanschanschluß aufweist.

Bisher ist dabei derart vorgegangen worden, daß ein separates Übergangsstück und ein separates Anschlußstück hergestellt worden sind, die dann an einem Ende des Coriolis-Massendurchflußmeßgeräts zusammengefügt worden sind, z. B. mittels Verschweißen. Dies ist jedoch bei der Herstellung des Coriolis-Massendurchflußmeßgeräts verhältnismäßig aufwendig.

Bei dem ferner beschriebenen Coriolis-Massendurchflußmeßgerät sind die Übergangsstücke und die Anschlußstücke jeweils aus einem einzigen gemeinsamen Werkstück hergestellt.

Ferner beschrieben ist ein Coriolis-Massendurchflußmeßgerät, mit einem zu Schwingungen anregbaren Meßrohr, einem das Meßrohr umschließenden Gehäuse und einem elektronischen Meßumformer.

Dem Meßumformer werden die von den Schwingungsaufnehmern des Coriolis-Massendurchflußmeßgeräts erfaßten Signale zugeführt, so daß von dem Meßumformer ein Massendurchflußsignal ermittelt und ausgegeben werden kann. Bisher ist dabei derart vorgegangen worden, daß der eigentliche Meßwertaufnehmer, also die Einrichtungen im Bereich des Meßrohrs, von dem eigentlichen Meßumformer getrennt worden sind. Häufig wird der Meßumformer nämlich in einem Aufsatz vorgesehen, der auf den Aufnehmer aufgesetzt wird. Dies macht das Coriolis-Massendurchflußmeßgerät jedoch relativ unhandlich.

Bei dem beschriebenen Coriolis-Massendurchflußmeßgerät ist der elektronische Meßumformer vollständig innerhalb des Gehäuses des Coriolis-Massendurchflußmeßgeräts vorgesehen.

Damit ergibt sich ein sehr kompaktes Coriolis-Massendurchflußmeßgerät, das einfach transportiert und installiert werden kann.

Ebenfalls beschrieben ist Coriolis-Massendurchflußmeßgerät, mit zwei Meßrohren, wobei zwei einander benachbarte Schwingungsknotenplatten vorgesehen sind, die die beiden Meßrohre miteinander verbinden.

Derartige Schwingungsknotenplatten sind z. B. aus der zuvor schon angesprochenen US 2004/0045369 A1 und der US 6,308,580 B1 bekannt. Diese Schwingungsknotenplatten definieren die effektive Schwingungslänge der Meßrohre und dienen auch dazu, ein Einkoppeln der Schwingungen der Meßrohre auf das Rohrleitungssystem, in das das Coriolis-Massendurchflußmeßgerät eingebaut ist, zu verhindern. Vorliegend wird dies insbesondere dadurch unterstützt, daß auf einer Seite der Meßrohre nicht nur eine Schwingungsknotenplatte sondern zwei einander benachbarte Schwingungsknotenplatten vorgesehen sind.

Es hat sich jedoch herausgestellt, daß im allgemeinen auch beim Vorsehen von zwei einander benachbarten Schwingungsknotenplatten auf einer Seite der Meßrohre immer noch Schwingungsanteile der Meßrohre in das Rohrleitungssystem einkoppeln.

Bei dem zuvor beschriebenen Coriolis-Massendurchflußmeßgerätist der Winkel zwischen den Ebenen der beiden Schwingungsknotenplatten derart gewählt, daß die Auslenkung der Meßrohre auf eine vorbestimmte Anregungskraft hin minimal ist.

Es ist also vorgesehen, daß zwischen den beiden Ebenen der Schwingungsknotenplatten ein derart optimierter Winkel vorgesehen ist, daß minimale Auslenkungen der Meßrohre erzielt werden. Über diese Auslenkungen erfolgt nämlich die Kopplung zwischen den Schwingungen der Meßrohre und den Schwingungen des Rohrleitungssystems, so daß damit eine verbesserte Schwingungsisolierung erzielt wird.

Gemäß einer bevorzugten Weiterbildung ist dabei vorgesehen, daß die Auslenkung der Meßrohre in einer vorbestimmten Raumrichtung minimal ist. Ganz besonders ist es bevorzugt, daß eine Funktion der Auslenkung der Meßrohre in wenigstens zwei voneinander verschiedenen Raumrichtungen minimal ist.

Damit ist auch ein derartiges Herstellungsverfahren für ein zwei Meßrohre aufweisendes Coriolis-Massendurchflußmeßgerät mit zwei einander benachbarten Schwingungsknotenplatten, die die beiden Meßrohre miteinander verbinden, beschrieben, das dadurch gekennzeichnet ist, daß der Winkel zwischen den Ebenen der beiden Schwingungsknotenplatten derart bestimmt wird, daß die Auslenkung der Meßrohre auf eine vorbestimmte Anregungskraft hin minimal ist.

Gemäß einer bevorzugten Weiterbildung wird gemäß diesem Herstellungsverfahren insbesondere derart vorgegangen, daß die Auslenkung der Meßrohre berechnet wird, vorzugsweise mittels einer Finite-Elemente-Methode. Wie bei dem zuvor beschriebenen Coriolis-Massendurchflußmeßgerät ist bei dem Herstellungsverfahren gemäß bevorzugter Weiterbildungen ebenfalls vorgesehen, daß die Auslenkung der Meßrohre in einer vorbestimmten Raumrichtung minimal ist, und ganz besonders bevorzugt, daß eine Funktion der Auslenkung der Meßrohre in wenigstens zwei voneinander verschiedenen Raumrichtungen minimal ist.

Nachfolgend wird ein bevorzugtes Ausführungsbeispiel der Erfindung unter Bezugnahme auf die Zeichnung im einzelnen erläutert. In der Zeichnung zeigt
- Fig. 1: ein Coriolis-Massendurchflußmeßgerät gemäß einem bevorzugten Ausführungsbeispiel der Erfindung in einer perspektivischen Ansicht, teilweise im Schnitt,
- Fig. 2: den Endbereich der Meßrohre des Coriolis-Massendurchflußmeßgeräts gemäß dem bevorzugten Ausführungsbeispiel der Erfindung im Schnitt,
- Fig. 3: schematisch die Auslenkung der Meßrohre des Coriolis-Massendurchflußmeßgeräts gemäß dem bevorzugten Ausführungsbeispiel der Erfindung auf eine vorbestimmte Anregungskraft hin,
- Fig. 4: eine Darstellung zur Findung des optimalen Winkels zwischen den einander benachbarten Schwingungsknotenplatten des Coriolis-Massendurchflußmeßgeräts gemäß dem bevorzugten Ausführungsbeispiel der Erfindung und
- Fig. 5: eine perspektivische Darstellung eines Teils des Schwingungserzeugers des Coriolis-Massendurchflußmeßgeräts gemäß dem bevorzugten Ausführungsbeispiel der Erfindung.

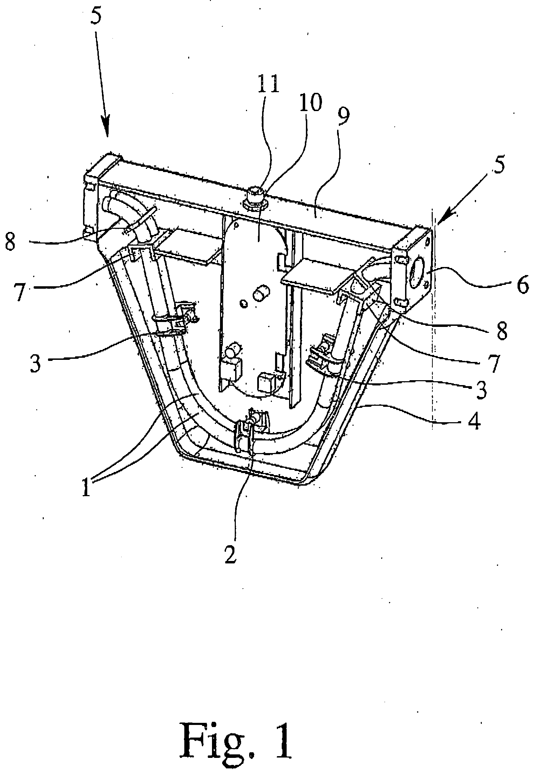

Aus Fig. 1 ist ein Coriolis-Massendurchflußmeßgerät ersichtlich, das zwei zu Schwingungen anregbare Meßrohre 1, einen Schwingungserzeuger 2 und zwei Schwingungsaufnehmer 3 aufweist. Die beiden Meßrohre 1 verlaufen innerhalb eines Gehäuses 4 des Coriolis-Massendurchflußmeßgeräts parallel zueinander, und zwar insgesamt mit einem im wesentlichen U-förmigen Verlauf. An den Enden der Meßrohre 1 ist jeweils ein Übergangs- und Anschlußstück 5 vorgesehen, das einerseits den Anschluß an das Rohrleitungssystem gewährleistet, in das das Coriolis-Massendurchflußmeßgerät eingebaut ist, nämlich mittels eines Flanschanschlusses 6, und andererseits den Übergang von dem einen Rohr des Rohrleitungssystems auf die beiden Meßrohre 1 gewährleistet, damit also als Strömungsteiler fungiert. Wesentlich ist dabei, daß das Übergangs- und Anschlußstück 5 jeweils aus einem einzigen gemeinsamen Werkstück hergestellt ist.

An den Enden der Meßrohre 1 sind jeweils zwei einander benachbarte Schwingungsknotenplatten 7, 8 vorgesehen. Dabei ist als äußere Schwingungsknotenplatte 8 eine im Querschnitt rechteckige Einrichtung vorgesehen, während die dazu benachbarte Schwingungsknotenplatte 7, die vom jeweiligen Übergangs- und Anschlußstück 6 weiter entfernt ist, ein U-Profil aufweist. Dieses U-Profil dient dazu, die gewünschten Schwingungen der Meßrohre 1 aufeinander zu und voneinander weg frequenzmäßig gut von unerwünschten Schwingungen in einer Ebene senkrecht dazu zu trennen.

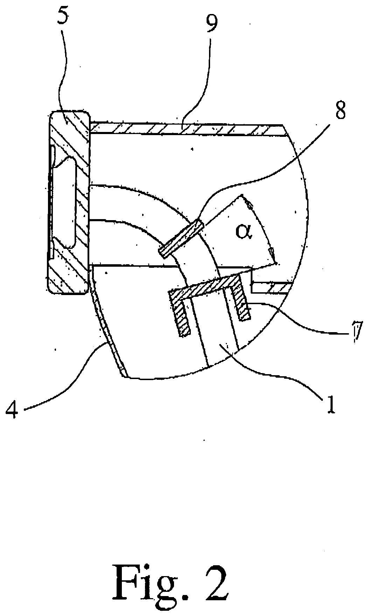

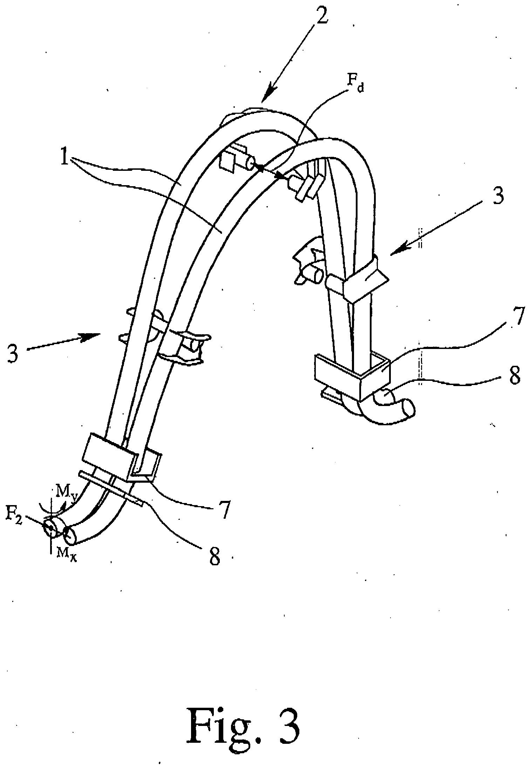

Zwischen den äußeren Schwingungsknotenplatten 7 und den inneren Schwingungsknotenplatten 8 ist ein vorbestimmter Winkel α vorgesehen, wie insbesondere auch aus Fig. 2 ersichtlich. Dieser Winkel α ist derart bemessen, daß auf eine vorbestimmte Schwingungsanregung der Meßrohre 1, in Fig. 3 mit F_{d} bezeichnet, minimale Auslenkungen der Meßrohre 1, dort mit F_{z}, Mₓ und M_{y} bezeichnet, erzielt werden. Die seitlichen Auslenkungen F_{z} und die Torsionsbewegungen M_{y} und Mₓ der Meßrohre 1 sind also minimiert.

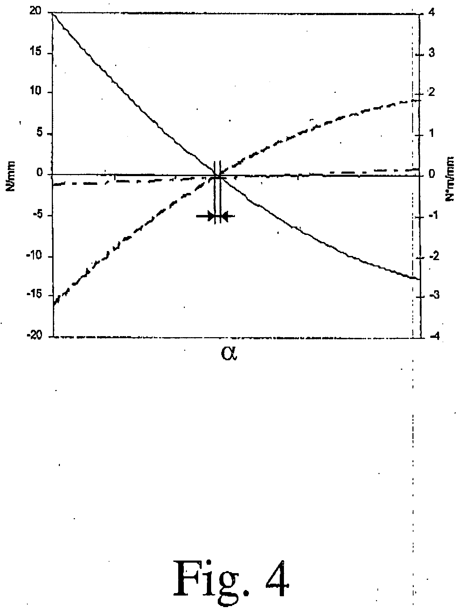

Zur Bestimmung des Winkels α zwischen den Schwingungsknotenplatten 7, 8 wird eine Finite-Elemente-Methode verwendet, im Rahmen derer berechnet wird, welche jeweiligen Auslenkungen der Meßrohre 1 sich bei unterschiedlichen Winkeln α zwischen den Schwingungsknotenplatten 7, 8 ergeben. Die Ergebnisse sind in Fig. 4 dargestellt, wobei ersichtlich ist, daß sich zwischen den beiden Pfeilen ein Bereich eines optimalen Winkels α ergibt, bei dem die Auslenkungen minimal sind.

Zwischen den beiden Übergangs- und Anschlußstücken 5 ist bei dem vorliegend beschriebenen Coriolis-Massendurchflußmeßgerät geine Verstärkungsbrücke 9 vorgesehen. Diese dient zur Schwingungsisolierung des Coriolis-Massendurchflußmeßgeräts. Dabei ist wesentlich, daß die Verstärkungsbrücke 9 vom Gehäuse 4 des Coriolis-Massendurchflußmeßgeräts verschieden ist, so daß das Gehäuse 4 relativ leicht ausgeführt werden kann, während die Verstärkungsbrücke 9 so steif und massiv hergestellt wird, daß den Anforderungen der Schwingungsisolierung gerade entsprochen wird. Auf diese Weise wird ein sehr leicht bauendes Coriolis-Massendurchflußmeßgerät erzielt. Weiter unterstützt wird dies dadurch, daß die Verstärkungsbrücke 9 als Hohlplatte ausgebildet ist, die annähernd die gleiche Steifheit aufweist, wie eine entsprechende massive Platte, jedoch wesentlich leichter ist.

Innerhalb des Gehäuses 4 ist der elektronische Meßumformer 10 des Coriolis-Massendurchflußmeßgeräts vorgesehen. Und zwar gilt dabei, daß innerhalb des Gehäuses 4 tatsächlich der vollständige Meßumformer 10 angeordnet ist, so daß keine Komponenten des Meßumformers 10 außerhalb des Gehäuses 4 erforderlich sind. Der elektrische Anschluß des Meßumformers 10 erfolgt über eine elektrische Buchse 11, die durch die Verstärkungsbrücke 9 hindurchgeführt ist, die ihrerseits im übrigen auch den gesamten Meßumformer 10 trägt.

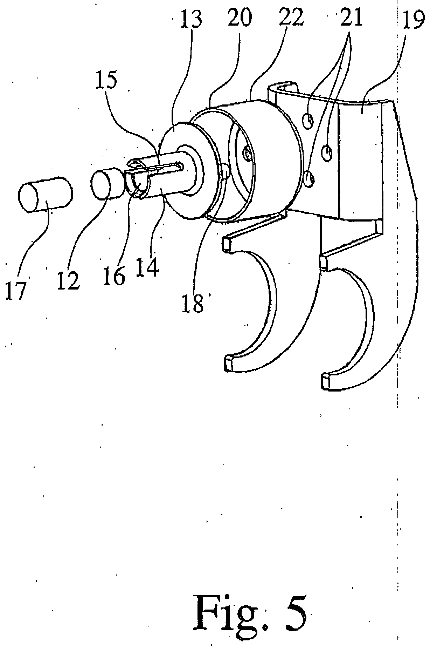

In Fig. 5 ist schließlich gezeigt, wie der Schwingungserzeuger 2 und auch die Schwingungsaufnehmer 3 im einzelnen ausgebildet sind, nämlich insbesondere hinsichtlich eines dazu vorgesehenen Permanentmagneten 12. Dieser Permanentmagnet 12 wirkt in bekannter Weise mit einer nicht weiter dargestellten Spule zusammen, um eine Schwingungsanregung der Meßrohre 1 zu erzielen bzw. Schwingungen der Meßrohre 1 zu erfassen. Für den Permanentmagneten 12 ist nun ein Magnethalter 13 vorgesehen, in den der Permanentmagnet 12 eingesetzt ist. Dazu ist der Magnethalter 13 im wesentlichen als Hohlzylinder ausgebildet, wobei seine Wände 14 Einschnitte 15 aufweisen, so daß die Wände 14 flexibel sind. Am oberen Ende der Wände 14 sind Rastvorsprünge 16 vorgesehen, so daß ein in den Magnethalter 13 eingesetzter Permanentmagnet 12 in dem Magnethalter 13 mittels einer Verrastung gehalten wird. Gemäß dem vorliegend beschriebenen bevorzugten Ausführungsbeispielwird ein zylinderförmiger Permanentmagnet 12 zusammen mit einem ebenfalls zylinderförmigen Metallstift 17 verwendet, die, wie aus Fig. 5 ersichtlich, in den Magnethalter 13 eingesetzt werden.

Der Magnethalter 13 selbst ist aus einem Kunststoffmaterial gefertigt und weist auf seinem Boden 20 Stifte 18 auf, mit denen er an einer Halteeinrichtung 19 des Schwingungserzeugers 2 bzw. des Schwingungsaufnehmers 3 befestigt werden kann. Die Befestigung erfolgt mittels einer Preßfügung. Dazu werden die an dem Magnethalter 13 ausgebildete Kunststoffstifte 18 in in der Halteeinrichtung 19 vorgesehene Bohrungen 21 eingeführt und durch diese hindurchgeführt, um die durch die Bohrungen 21 der Halteeinrichtung 19 hindurchgeführten Enden dann zu erwärmen und mit einem Kopf zu versehen, der ein Herausrutschen aus der Bohrung 21 vermeidet, so daß es zur Fixierung des Magnethalters 13 an der Halteeinrichtung 19 kommt. Zum mechanischen Schutz dieser Vorrichtung ist im übrigen ein Schutzkörper 22 vorgesehen, der zwischen den Magnethalter 13 und die Halteeinrichtung 19 gesetzt wird.

## Patentansprüche

1. Coriolis-Massendurchflußmeßgerät, mit einem zu Schwingungen anregbaren Meßrohr (1), einem Schwingungserzeuger (2) oder/und einem Schwingungsaufnehmer (3), wobei der Schwingungserzeuger (2) oder/und der Schwingungsaufnehmer (3) einen Permanentmagneten (12) aufweist, wobei der Permanentmagnet (12) in einem Magnethalter (13) vorgesehen ist, **dadurch gekennzeichnet, daß** der Magnethalter (13) aus Kunststoff besteht.

2. Coriolis-Massendurchflußmeßgerät nach Anspruch 1, **dadurch gekennzeichnet, daß** der Permanentmagnet (12) in dem Magnethalter (13) formschlüssig oder/und kraftschlüssig gehalten ist.

3. Coriolis-Massendurchflußmeßgerät nach Anspruch 1 oder 2, **dadurch gekennzeichnet, daß** der Magnethalter (13) derart ausgestaltet ist, daß der Permanentmagnet (12) in alle Richtungen fixiert ist.

4. Coriolis-Massendurchflußmeßgerät nach einem der Ansprüche 1 bis 3, **dadurch gekennzeichnet, daß** der Magnethalter (13) einen Aufnahmeraum für den Permanentmagneten (12) aufweist, in dem der Permanentmagnet (12) mittels einer Verrastung gehalten ist.

5. Coriolis-Massendurchflußmeßgerät nach Anspruch 4, **dadurch gekennzeichnet, daß** der Magnethalter (13) flexible Wände (14) aufweist.

6. Coriolis-Massendurchflußmeßgerät nach einem der Ansprüche 1 bis 5, **dadurch gekennzeichnet, daß** der Magnethalter (13) im wesentlichen als Hohlzylinder ausgebildet ist, in den der Permanentmagnet (12) eingesetzt ist.

7. Coriolis-Massendurchflußmeßgerät nach einem der Ansprüche 1 bis 6, **dadurch gekennzeichnet, daß** der Schwingungserzeuger (2) oder/und der Schwingungsaufnehmer (3) eine Halteeinrichtung (19) aufweist, mit der der Magnethalter (13) mittels einer Preßfügung verbunden ist.

## Claims

1. Coriolis mass flowmeter with a measuring tube (1) that can be excited to oscillation, an oscillation driver (2) and/or an oscillation sensor (3), wherein the oscillation driver (2) and/or the oscillation sensor (3) has a permanent magnet (12), wherein the permanent magnet (12) is provided in a magnet holder (13), **characterized in that** the magnet holder (13) consists of plastic.

2. Coriolis mass flowmeter according to claim 1, **characterized in that** the permanent magnet is form-locked and/or friction-locked into the magnet holder (13).

3. Coriolis mass flowmeter according to claim 1 or 2, **characterized in that** the magnet holder (13) is formed such that the permanent magnet (12) is affixed in all directions.

4. Coriolis mass flowmeter according to any one of claims 1 to 3, **characterized in that** the magnet holder (13) has a receptacle for the permanent magnet (12) in which the permanent magnet (12) is held by means of a catch mechanism.

5. Coriolis mass flowmeter according to claim 4, **characterized in that** the magnet holder (13) has flexible walls (14).

6. Coriolis mass flowmeter according to any one of claims 1 to 5, **characterized in that** the magnet holder (13) is essentially formed as a hollow cylinder in which the permanent magnet (12) is inserted.

7. Coriolis mass flowmeter according to any one of claims 1 to 6, **characterized in that** the oscillation driver (2) and/or the oscillation sensor (3) has a holding device (19) that is attached to the magnet holder (13) by means of compression molding.

## Revendications

1. Débitmètre massique de Coriolis, comprenant un tube de mesure (1) pouvant être excité de manière à osciller, un générateur d'oscillations (2) et/ou un récepteur d'oscillations (3), le générateur d'oscillations (2) et/ou le récepteur d'oscillations (3) présentant un aimant permanent (12), l'aimant permanent (12) étant prévu dans un support d'aimant (13), **caractérisé en ce que** le support d'aimant (13) se compose de plastique.

2. Débitmètre massique de Coriolis selon la revendication 1, **caractérisé en ce que** l'aimant permanent (12) est retenu par engagement par correspondance de formes et/ou par force dans le support d'aimant (13).

3. Débitmètre massique de Coriolis selon la revendication 1 ou 2, **caractérisé en ce que** le support d'aimant (13) est configuré de telle sorte que l'aimant permanent (12) soit fixé dans toutes les directions.

4. Débitmètre massique de Coriolis selon l'une quelconque des revendications 1 à 3, **caractérisé en ce que** le support d'aimant (13) présente un espace de réception pour l'aimant permanent (12) dans lequel l'aimant permanent (12) est retenu par encliquetage.

5. Débitmètre massique de Coriolis selon la revendication 4, **caractérisé en ce que** le support d'aimant (13) présente des parois flexibles (14).

6. Débitmètre massique de Coriolis selon l'une quelconque des revendications 1 à 5, **caractérisé en ce que** le support d'aimant (13) est réalisé essentiellement sous forme de cylindre creux dans lequel est inséré l'aimant permanent (12).

7. Débitmètre massique de Coriolis selon l'une quelconque des revendications 1 à 6, **caractérisé en ce que** le générateur d'oscillations (2) et/ou le récepteur d'oscillations (3) présentent un dispositif de retenue (19) avec lequel le support d'aimant (13) est connecté au moyen d'un assemblage par pressage.
